Europäisches Patentamt

European Patent Office

Office européen des brevets

(19)

(11) Publication number: 0 351 028
A2

(12) EUROPEAN PATENT APPLICATION

(21) Application number: 89201878.9

(22) Date of filing: 14.07.89

(51) Int. Cl.⁴: C08L 63/00 , C08L 101/00 , C08J 5/04

(30) Priority: 15.07.88 US 219209

(43) Date of publication of application:
17.01.90 Bulletin 90/03

(84) Designated Contracting States:
DE FR GB IT NL SE

(71) Applicant: AMOCO CORPORATION
200 East Randolph Drive
Chicago Illinois 60680(US)

(72) Inventor: Hecht, Daniel H.
58 Marlborough Ave.
Middlesex NJ 08846(US)
Inventor: Gardner, Hugh C.
1273 Millstone River Road
Somerville NJ 08876(US)
Inventor: Qureshi, Shahid P.
5 Surrey Lane
Piscataway, NJ 08854(US)
Inventor: Manders, Peter W.
141 Center Street
Clinton NJ 08809(US)
Inventor: Newman-Evans, Richard H.
146 Capricorn Drive, Apt. 2
Somerville NJ 08876(US)

(74) Representative: de Bruijn, Leendert C. et al
Nederlandsch Octrooibureau
Scheveningseweg 82 P.O. Box 29720
NL-2502 LS 's-Gravenhage(NL)

(54) Resin particle-filled, fiber-reinforced composites.

(57) Layered, fiber-reinforced composites comprising a cycloaliphatic epoxy resin matrix and continuous fiber are toughened by including a resinous particulate modifier in said matrix resin within the inter-ply spacing of the layered composite. The method of the invention is particularly effective in providing composite structures having a marked improvement in toughness over similar composites based on other epoxy resins.

## RESIN PARTICLE-FILLED, FIBER-REINFORCED COMPOSITES

### BACKGROUND OF THE INVENTION

This invention relates to composite materials and more particularly to tough, impact resistant fiber-reinforced composites. Still more particularly, this invention relates to composites comprising structural fiber and a matrix resin which have good impact resistance, methods for toughening fiber-reinforced composites and to particles useful in toughening such composites.

Fiber-reinforced composites are high strength, high modulus materials which are finding wide acceptance for use in sporting goods and in producing consumer items such as appliances. Such materials are also finding increased acceptability for use as structural components in automotive applications, as components of buildings and in aircraft. Typically, the composites used in structural applications comprise structural fibers in the form of continuous filaments or woven cloth embedded in a thermosetting or thermoplastic matrix. Such composites may exhibit considerable strength and stiffness, and the potential for obtaining significant weight savings makes them highly attractive for use in primary structural applications as a metal replacement. However, acceptance for many structural applications has been limited by the fact that many of the composite materials presently available are brittle. The inability of such composites to withstand impact while retaining useful tensile and compression strengths has been a serious problem for many years. Compensating for the low impact resistance of such materials may ordinarily be accomplished by increasing the amount of material employed. This approach increases costs, reduces the weight savings that might otherwise be realized and may make them unacceptable for many uses.

The composites industry has long been involved in finding ways to overcome these deficiencies. Considerable effort has been expended over the past two decades directed toward the development of composites with improved fracture toughness. Inasmuch as most of the commonly employed matrix resins, as well as many of the reinforcing fibers, are generally brittle, much of that effort has gone into a search for component replacements having better toughness characteristics. As a consequence, the search for toughened matrix resins has become the subject of numerous recent patents and publications.

For decades, the plastics industry has used rubber modifiers to toughen rigid, frequently brittle thermoplastic and thermoset engineering resins. Most often the rubber is dispersed in the form of particles throughout the rigid resin. Various means for altering the interaction between the rubber particle and the rigid phase to improve the effectiveness of the rubber component have also been explored. For example, the rubber components have been modified by grafting to change compatibility with the rigid phase, and adding reactive functional groups to the rubber to promote bonding to the rigid phase has also been shown to be effective. Other approaches have included the combining of dissimilar resins, forming blends and alloys with improved properties.

The methods used for toughening engineering resins have been adapted for the toughening of the matrix resins commonly used in composite structures as shown, for example, by Diamont and Moulton in "Development of Resin for Damage Tolerant Composites - A Systematic Approach," 29th National SAMPE Symposium, April 3 - 5, 1984. The forming of alloys and blends by adding a more ductile thermoplastic such as a polysulfone to an epoxy resin formulation has also been shown to improve the ductility of the epoxy resin and provide enhanced toughness, according to British patent 1,306,231, published February 7, 1973. More recently, combinations of an epoxy resin with terminally functional thermoplastics were shown to exhibit enhanced toughness. See U.S. patent 4,498,948. Still more recently, curable combinations of epoxy resins and thermoplastics with reactive terminal functionality were also said to improve the toughness of specifically formulated matrix resins, provided that the neat resin after curing exhibits a specific phase-separated morphology having a cross-linked glassy phase dispersed within a glassy continuous phase. See U.S. patent 4,656,208. Further improvements are said to be achieved by including a reactive rubber component in the form of a cross-linked particle which is to be contained within the cross-linked dispersed glassy phase. See U.S. patent 4,680,076. Still more recently, the use of an infusible particle made from a rubber dispersed within the phase-separated cross-linked epoxy resin matrix has been suggested for toughening composites based on such matrix resins. See U.S. patent 4,783,506.

Although the addition of rubber, thermoplastics and the like generally improves the ductility and impact resistance of neat resins, the effect on the resulting composites is not necessarily beneficial. In many instances the increase in composite toughness may be only marginal, and a reduction in high temperature properties and in resistance to environmental extremes such as exposure to water at elevated temperatures frequently is seen. Composite structures that rely on complex manufacturing methods or on unique resin morphologies that are difficult to reproduce for achieving improvements in toughness may require an impractical degree of control during fabrication, adding to the production costs and often resulting in erratic performance and poor reliability.

An alternative approach to producing toughened composites has been the development of layered composite structures having layers formed of fibers imbedded in a matrix resin alternated with layers formed of a thermoplastic resin, described in Japanese patent application 49-132669, published May 21, 1976. More recently, in U.S. patent 4,604,319, there were disclosed layered fiber-resin composites having a plurality of fiber-reinforced matrix resin layers inter-leafed with thermoplastic layers adhesively bonded to the reinforced matrix resin layers. Inter-leaf structures are ordinarily produced by impregnating continuous fiber to form prepreg, then laying up the composite by alternating prepreg with sheets of thermoplastic film. The laid-up structure is then subjected to heat and pressure, curing the matrix resin and bonding the layers. The patent also discloses inter-leaf layers which comprise a thermoplastic filled with a reinforcing material such as chopped fibers, solid particles, whiskers and the like.

Although inter-leafed composite structures with improved toughness have been disclosed, there has been some sacrifice in other physical properties, including a reduction in glass transition temperatures together with an increase in creep at high temperatures. Further difficulties with such composites may include a loss in stiffness for many such compositions, adhesive failure that may occur between layers formed of dissimilar resins and property deterioration during use due to poor solvent resistance. In addition, prepregs based on thermoplastic resin generally are lacking in tack, which complicates their fabrication into composites and increases the degree of skill needed to fabricate complex structures. This may in turn result in increased scrap losses and a need for more complex quality control procedures, increasing manufacturing costs in order to achieve an acceptable level of reliability.

The compositions and methods presently available for producing toughened composites thus require further improvement. Composites having improved resistance to impact, and particularly better compressive strength after impact are needed.

## SUMMARY OF THE INVENTION

The present invention is a toughened layered composite which comprises a cycloaliphatic epoxy resin matrix, continuous fiber imbedded in said matrix resin and forming a plurality of spaced-apart, discrete layers or plies, and a resinous particulate modifier imbedded in said matrix resin within the inter-ply spacing of the layered composite. The particulate modifier acts to maintain the spacing between the layers. The resulting composite structures exhibit a marked improvement in toughness over similar composites based on other epoxy resins.

## DETAILED DESCRIPTION

The toughened composite structures of this invention comprise discrete layers formed of continuous fiber embedded in a cycloaliphatic epoxy resin matrix, the layers being separated or spaced normally apart by laminar regions or layers comprising matrix resin filled with a particulate modifier.

### The Matrix Resins

The matrix resins useful in forming toughened composites according to the practice of this invention are epoxy formulations comprising in general a cycloaliphatic epoxy resin and an appropriate curing agent such as a diamine hardener or the like are preferred. The formulations may also include such additional components as are commonly employed in the thermoset composite art.

The epoxy resins which may be employed are curable cycloaliphatic epoxy resins having a plurality of epoxy groups per molecule. Such resins are commonly employed for producing composite materials, and many are readily available from commercial sources. Examples of such resins are polyglycidyl compounds, including the reaction products of polyfunctional cycloaliphatic compounds such as alcohols, phenols, carboxylic acids or amines with epichlorohydrin, and epoxidized dienes or polyenes. Preferred examples of

3

such cycloaliphatic epoxides include the reaction products of polyfunctional cycloaliphatic carboxylic acids with epichlorohydrin cycloaliphatic epoxides, cycloaliphatic epoxy ethers such as bis(2,3-epoxycyclopentyl) ether, and cycloaliphatic epoxy esters. A wide variety of these epoxy resins are well known and some are available from commercial sources under trade names such as epoxy resins designated 4234, 4221 and 4206, from Union Carbide Company, and XU71756 from Dow Chemical Company.

Mixtures of such cycloaliphatic epoxy resins may also be used, as well as combinations of such resins with other epoxy resins such as Bisphenol A epoxides, epoxy novolacs, and glycidyl amines, which are readily available under such trade names as PGA-X from Sherwin Williams Company, DEN 431 from Dow Chemical Company, Glyamine 125 from F.I.C. Corp. and RD87-160 and MY-720 from Ciba-Geigy Corp.

Diamine hardeners which may be used include the aromatic diamines conventionally employed in formulating epoxy resins, such as for example, 4,4'-diaminodiphenyl ether, 4,4'-diaminodiphenyl methane, 4,4'-diaminodiphenyl sulfone, 3,3'-diaminodiphenyl sulfone, p-phenylene diamine, m-phenylene diamine, 4,4'-bis(aminodiphenyl) propane, 4,4'-diaminodiphenyl sulfide, trimethylene glycol bis(p-aminobenzoate) and the like, as well as their various position isomers. Also useful are the variety of polynuclear aromatic diamine hardeners such as those disclosed, for example, in U.S. patents 4,579,885 and 4,517,321, and U.S. patent 4,686,250, all incorporated herein by reference, as well as xylylene diamine, bis(aminomethyl) cyclohexane, dicyandiamide and the like. The various diamine hardeners may be used alone or in combination.

Suitable epoxy resin formulations may be prepared according to methods and practices well known and widely used in the resin art. Generally the matrix resin formulations will comprise greater than 2 parts by weight (pbw) diamine hardener per hundred parts by weight epoxy resin. Although the particular level selected will depend upon the particular diamine employed, preferably at least 3 pbw and more preferably from about 6 to about 150 pbw diamine hardener per hundred pbw epoxy resin will be used. The amount of each component selected will depend upon the molecular weights of the individual components and the molar ratio of reactive amine (N-H) groups to epoxy groups desired in the final matrix resin system. For most prepreg and composite applications, sufficient diamine hardener will be used to provide a molar ratio of N-H groups to epoxide groups in the range of from about 0.3/1 to 1.8/1, preferably from 0.4/1 to 1.3/1.

The formulations may further include a thermoplastic polymer dissolved therein prior to curing. Such materials may contribute to the toughness of the resulting composite by increasing the ductility and impact resistance of the cured resin formulation. Thermoplastics may also increase the viscosity and film strength of the uncured resin, thus improving the resin processability during impregnating operations and the handling of the prepreg during composite manufacture. Although a variety of thermoplastics are known in the art for use in combination with epoxy resins, including for example polyaryl ethers such as polyaryl sulfones, polyether ketones, polyphenylene ethers and the like, as well as polyarylates, polyamides, polyamide-imides, polyether-imides, polycarbonates, phenoxy resins and the like, in order to be effective for improving the viscosity, processability and handling characteristics the thermoplastic selected will be soluble in the uncured epoxy resin formulation. The proportion of thermoplastic employed will depend in part upon the thermoplastic selected and the particular end use envisioned. However, for most purposes, the formulation will comprise from 0 to 30 pbw of thermoplastic per 100 pbw of the combined diamine hardener and epoxy resin components.

The epoxy formulations may additionally include an accelerator to increase the rate of cure. Any of the accelerators known and used in the epoxy resin art may be employed in conventional amounts, including Lewis acid:amine complexes such as $BF_3$:monoethylamine, $Bf_3$:triethanolamine, $BF_3$:piperidine and $BF_3$:2-methylimidazole; amines such as imidazole, 1-methyl imidazole, 2-methyl imidazole, N,N-dimethylbenzylamine and the like; acid salts of tertiary amines such as the p-toluene sulfonic acid:imidazole complex and the like, salts of trifluoromethane sulfonic acid such as FC-520 (obtained from 3-M Company), organophosphonium halides, dicyandiamide, 4,4'-methylene bis(phenyl-dimethyl urea) and 1,1-dimethyl-3-phenyl urea. Mixtures of such accelerators may also be employed. For some end uses it may also be desirable to include dyes, pigments, stabilizers, thixotropic agents and the like, and these and other additives may be included as needed at levels commonly practiced in the composite art. Upon curing, the matrix resin formulations, exclusive of any such particulate additives which may be employed, will form a substantially single, continuous rigid phase.

## The Fibers

The matrix resin formulation will be combined with continuous fiber reinforcement or structural fibers and a particulate modifier in forming toughened composites according to the practice of this invention. Suitable fibers may be characterized in general terms as having a tensile strength of greater than 7000 $kg/cm^2$ and a tensile modulus of greater than 140.000 $kg/cm^2$. Fibers useful for these purposes include carbon or graphite fibers, glass fibers and fibers formed of silicon carbide, alumina, titania, boron and the like, as well as fibers formed from organic polymers such as for example polyolefins, poly(benzothiazole), poly(benzimidazole), polyarylates, poly(benzoxazole), aromatic polyamides, polyaryl ethers and the like, and may include mixtures comprising two or more such fibers. Preferably the fibers will be selected from glass fibers, carbon fibers and aromatic polyamide fibers such as the fibers sold by the DuPont Company under the trade name Kevlar. The fibers may be used in the form of continuous tows of typically from 500 to 420,00 filaments, as continuous unidirectional tape or as woven cloth.


## The Particulate Modifiers


The particulate modifiers or resin particles employed in the practice of this invention comprise a finely divided resin. The resin particles may be solid or hollow and take any convenient shape, and may for example be formed into bead-like spheres or oblate spheroids, or produced by pulverizing or grinding a rigid resin to provide particles rough and irregular in shape. Cylinders and prisms, both regular and irregular in cross section, preferably with an aspect ratio greater than 2:1, such as may be encountered in short fibers, flock, fiber pulp, fibrils and the like, and flake-like particles, again with an aspect ratio greater than 2:1, represented by fragments of film, by mechanically flattened particles and the like may also be used in the practice of this invention.

The resin particles may be more particularly described as being a finely divided, fully or partially cured, rigid thermoset resin, a finely divided rigid thermoplastic resin or a mixture of such resins. The resins are characterized as rigid by which it is meant that the resin selected will have, in its final particle form, sufficient thermal resistance, hardness and rigidity to resist being melted, compressed or flattened under the pressures and temperatures that will be encountered during the fabricating and curing of the laminate. Soft or rubbery resins having glass transition temperatures below about 15° C or hardness values below about D-50 (Shore), and resins having a melt or heat deflection temperature substantially below the expected processing temperature may melt or significantly soften during composite fabrication and thus will not be suited for use as particulate modifiers of this invention.

Where the particles will be dispersed in the matrix resin formulation and then applied to the fiber reinforcement or prepreg, the particles will necessarily be formed of a resin selected to be substantially insoluble in the matrix resin formulation prior to gelation.

Representative of the thermoset resins useful as particles in the practice of this invention are cured formulations based on epoxy resins, phenolic resins, melamine resins and the like. Methods for producing fully cured, finely divided thermoset resins in powder and bead form are well known. Cured thermoset resins in finely divided form find wide use in the resin compounding art as fillers, particularly for use with elastomers, and many such resins are available in powder or bead form from commercial sources. A variety of thermoset fiber and natural fiber materials may also be processed to provide flock suitable for use as particles, including rayon fiber, olefin fiber, both aromatic and aliphatic polyamide fiber, acrylic fiber, phenolic fiber, polyacrylonitrile fiber, pitch fiber and the like, as well as jute, cotton, wool and similar natural fiber. Some such fiber materials are available in the form of flock or pulp from commercial sources. Many such fibers may be oxidized, carbonized, graphitized or otherwise treated to thermoset, insolubilize and further transform the fibers to form particles suitable for the practice of this invention including, for example, carbonized rayon fiber, thermoset or oxidized polyacrylonitrile fiber, and carbon or graphite fiber derived by carbonizing or graphitizing fiber formed from polyacrylonitrile, a petroleum or coal tar pitch or the like.

The rigid thermoset and thermoplastic resins may also be formed into film by well known methods and chopped to provide flake suitable for use as the shaped particulate modifier, and resins having adequate ductility may be molded and flaked in commercial equipment, or formed into particles and then subjected to pressure using mill rolls or the like, usually with heating, to form flake-like particles.

The thermoplastic resin particles may be formed from any of the widely available rigid thermoplastics known in the art, including the engineering resins such as polyamides, polyimides, polyamide-imides, polyarylates, polycarbonates, polyaryl ethers, polyaryl ketones, polyaryl sulfones and the like, as well as many of the more rigid molding resins and textile fiber resins widely available, including polyacrylonitrile, polyvinyl chloride, cellulosic resins, methylmethacrylate resins and the like.

Rigid vinyl aromatic resins, including polymers and copolymers of styrene, vinyltoluene and the like, as well as graft copolymers of styrene and optionally one or more additional copolymerizable vinyl monomers on a rubbery polymeric substrate, may also be useful. Specific examples of such styrenic resins include acrylonitrile-butadiene-styrene (ABS) resins, methylmethacrylate-butadiene-acrylonitrile-styrene (MABS) resins, and the like. Such materials are widely available from a variety of commercial sources.

Resins such as styrene-butadiene copolymers, styrenic graft copolymers comprising more than about 45 wt% rubber substrate and the like may tend to be less rigid and possibly even soft or rubbery. Such materials, even when insoluble in the matrix resin, will be unsuitable for use as a particulate modifier in the practice of this invention without further modification, particularly by cross-linking, grafting with carboxylic compounds or the like. Such methods may be used to raise the glass transition temperature (Tg) of such rubbery resins to at least 15° C, more preferably to room temperature and still more preferably above room temperature, thereby increasing the resin hardness and rendering the resin sufficiently rigid to be used as a particulate modifier. Other methods for imparting the necessary rigid character to rubbery polymers include grafting the polymers in particle form with another monomer to provide particles having a rigid outer shell, and such core-shell particulate modifiers are also known and commercially available.

A variety of rigid, possibly cross-linked copolymers of butadiene are known having the necessary hardness and a Tg above about 15° C and these may also be employed. For example, unmodified nitrile rubbers with a high content of acrylonitrile as well as carboxylated analogs having the requisite high values for Tg are known, and acrylic rubbers having carboxyl functionality and Tg values in the range of 20° to 36° and even higher are commercially available; both of these resin types may be formed into particles suitable for use in the practice of this invention.

Suitable carboxylated rubbers include conventional diene and olefin rubbers having, or modified to include, from about 0.1 to about 5 wt%, preferably from about 0.5 to about 3 wt% carboxyl or carboxamide functionality. Representative of such diene rubbers are the variety of well known rigid, possibly cross-linked copolymers of butadiene or isoprene including for example the diene-acrylonitrile copolymers widely available as nitrile rubbers, copolymers of vinyl aromatic monomers and diene monomers such as the styrene-butadiene copolymers known as SBR rubbers, and terpolymers of dienes with acrylonitrile and styrene or vinyl toluene, all of which, when modified with the desired level of carboxyl functionality, may be described as carboxylated diene rubbers. Many such rubbers having Tg values above 15° C and the desired carboxylic functionality are readily available from commercial sources. Also useful are rubbery copolymers of acrylate esters with carboxyl functionality, which may be described as carboxylated acrylic rubbers. Acrylic rubbers with the desired level of carboxylic functionality and having Tg values in the range of 20° to 36° C and even higher are also commercially available in a variety of forms. Other polymers which may be similarly modified to include carboxyl functionality include rubbery copolymers and particularly graft copolymers of styrene, vinyltoluene or the like and optionally one or more additional copolymerizable vinyl monomers on a rubbery polymeric substrate, using a sufficiently high level, preferably greater than 60 wt%, of the rubbery substrate component. Specific examples include rubbery acrylonitrile-butadiene-styrene (ABS) polymers, methylmethacrylate-butadiene-acrylonitrile-styrene (MABS) polymers and the like.

Modification of rubbers to include carboxyl functionality may be accomplished by a variety of well-known processes, including copolymerizing the rubber monomers with a suitable copolymerizable carboxylic monomer or by grafting the preformed rubber in solution, suspension or latex form with carboxylic compounds such as maleic anhydride, maleimide, acrylic acid, itaconic acid or the like. Other methods for providing carboxylated rubbery polymers having the necessary rigid character include grafting the polymers in particle form with mixtures of a rigid monomer and a copolymerizable carboxylic compound to provide particles having a rigid outer shell with reactive carboxylic functionality, and many such core-shell particulate modifiers are also known and commercially available. Also suitable are post reaction processes for carboxylating rubbery diene copolymers, olefin rubbers and the like, as recently described in U.S. patents 4,740,552 and 4,654,405.

The carboxylated rubbers suitable for use as rubber particles according to the practice of this invention may thus be described as carboxylated rubbers having a Tg greater than about 15° C which may be selected from the group of carboxyl group-containing rubbers consisting of carboxylated diene rubbers, carboxylated acrylic rubbers, and mixtures thereof.

It may also be desirable to employ resin particles having reactive functional groups capable of reacting with the matrix resin, thereby becoming chemically bound. Examples of such materials which may be useful in particle form include impact-modified styrenic resins and ABS resins containing copolymerized carboxylic acid or carboxamide functionality, copolymers of styrene with maleic anhydride, maleimide, acrylic acid or the like, and a variety of phenolic and melamine resins that may remain usefully reactive even after curing. Suitable resins may also be produced through post reaction processes for carboxylating ABS resins, styrene copolymers, phenylene ether resins and the like, as recently described in U.S. patents 4,740,552 and 4,654,405. Particles formed of such resins may be made more compatible with the matrix resin by becoming chemically bound to the matrix resin or by having an improved affinity for the matrix resin due to the presence of polar groups at the particle surface.

Good adhesion between the resin particle and the matrix resin may enhance the effectiveness of the particle in toughening composites. Many of the particle precursor materials will exhibit good adhesion to thermoset matrix resins as an inherent characteristic of the resin. It may also be desirable to modify the resin particles to include functional groups capable of reacting with the matrix resin and thereby becoming chemically bound, and methods for incorporating compounds with reactive functionality into resins are known in the art. Alternatively, surface modification of the particle or its precursor may improve adhesion by chemically binding the matrix resin to the particle surfaces or by improving the affinity of the particle for the matrix resin due to the presence of polar groups at the particle surface.

## The Composite Structures

The toughened composite structures of this invention comprise discrete layers formed of continuous fiber embedded in a matrix resin, the layers or plies being separated or spaced normally apart, the layer surfaces defining laminar regions or spacing layers comprising matrix resin filled with the particulate modifier. The particulate modifier serves to separate the plies, and the thickness of the ply spacing will thus be directly related to the particle size, particularly where the particles are substantially spheroidal in shape. However, where the particles take the shape of a film fragment or flake, the particles may be dispersed as a monolayer on the surfaces of the plies or the particles are stacked in brick-like fashion, depending upon the method of fabrication selected; the ply spacing that results will then be a multiple of the thickness of the flake. While cylindrical particles such as chopped fiber flock or fibrils may become entangled and felted, giving a spacing substantially greater than the cross sectional dimension of the particles, the preferred cylindrical particles will be of a character and size such that entanglement and felting do not occur.

The filled resin spacing layers separating the plies will have an average thickness lying in the range of from about 1 micron to about 75 microns. It appears that the effectiveness of such filled matrix resin layers in toughening the composite may be greatest for layers substantially uniform in thickness, which could best be accomplished by using particles which are substantially uniform in size. As used herein, the term "particle size" refers to the particle dimension determining the ply separation, which for small, irregular or substantially spherical particles is ordinarily the particle thickness or smallest diameter. For fiber-like particles, particle size will be taken to refer to the diameter of the fiber, while for flake-like particles the term refers to the thickness of the flake. Inasmuch as it will not be practical in most instances to obtain particles uniform in size throughout, the particulate modifiers will ordinarily comprise mixtures of particles encompassing a variety of particle sizes, with the majority of the particles lying in the range of from 1 to about 75 microns, and these mixtures will be useful and effective in toughening composites.

The proportion of each component employed in fabricating the toughened composites of this invention will depend in part upon the end use envisioned, as well as on the particular resin, fiber and particulate materials selected. Over all, the composites will comprise from about 20 to about 80 wt% continuous fiber, the balance comprising matrix resin and particulate modifier with the particulate filler amounting to from 1 to about 25 wt% based on combined weight of the particulate modifier and the matrix resin formulation. Although the amount of particulate modifier needed to toughen the composite will lie within the stated range, the optimum level will necessarily vary depending upon the type of matrix resin, the fiber loading, the particle type and similar factors and must therefore be determined for the particular fiber and resin system employed. In general, it will be desirable to employ the lowest level of particulate modifier that will impart the desired improvement in composite toughness. Although greater than optimum levels may be employed, further improvements will be marginal, and other physical properties such as hot/wet strength may be detrimentally affected. The method of this invention for toughening composites provides composites having a very high fraction of the particulate modifier located in the interply spacing, and thus lends itself well to providing improvements in toughness with a minimum of particulate modifier.

## Composite Fabrication

Methods ordinarily used for the production of layered composites may be readily adapted for fabricating the composites of this invention. Most commonly, such composites are formed from impregnated tape comprising uniformly disposed, parallel filaments of continuous fiber, or from resin-impregnated fabric woven from continuous fiber tow. These impregnated fiber structures, designated prepreg, may be produced by impregnating tape or fabric with matrix resin formulation in an uncured state using any convenient method including melt coating, calendaring, dip impregnation with a resin solution or molten resin, melt pressing the tape or fabric into a film of the matrix resin or the like.

The composite will then be formed by laying up sheets or tapes of the prepreg to form a layered stack or lay-up, and curing the lay-up, usually with heat and under pressure. The prepreg layers, each comprising continuous fiber and matrix resin in uncured form, will have their adjoining surfaces adhered upon curing to form a single structure having discrete layers of continuous fiber embedded in an essentially continuous and substantially homogeneous matrix resin phase.

In forming the toughened composites of this invention, it will be necessary to distribute particulate modifier uniformly between each of the prepreg layers. A variety of methods may be used for this purpose, and the placing of particulate modifier at a surface of the prepreg may be carried out as a separate step prior to or during the lay-up operation, or integrated into the step of impregnating the tape or woven fabric. The former will be referred to as two-step processes, while the latter are termed one-step processes.

Methods for carrying out the two-step process include physically distributing the particles by a sprinkling, spraying, spreading or similar operation on a surface of each prepreg tape or sheet during the lay-up operation; dispersing the particulate modifier uniformly in liquid matrix resin formulation and coating the mixture on a surface of the prepreg; forming a film of particulate modifier-filled matrix resin formulation and inter-leafing the prepreg layers with the film during the lay-up operation and the like. Two-step methods based on a coating or interleafing step provide added matrix resin, ensuring that adequate matrix resin is available to fill the laminar region between the plies formed by the particulate modifier.

In the alternative one-step method, the particulate modifier may be placed on a surface of the prepreg during the impregnation step by dispersing the particulate modifier into the matrix resin and then carrying out the impregnation step. In this process, a fiber structure having a surface layer of the filled resin may be formed, for example, by placing a film of filled resin on a surface of tape or fabric, or by coating the filled resin directly onto the surface. The continuous fiber is then embedded in the matrix resin by heating the fiber-and-resin structure in a melt-pressing or ironing operation. The matrix resin becomes molten and a portion flows into the fiber structure, leaving behind at the tape or fabric surface matrix resin filled with those particles too large to enter the interstices of the fiber structure.

The one-step process may be viewed as a filtering operation whereby the fiber structure acts as a filter, passing matrix resin while retaining at the surface those particles larger than the openings between the fibers.

As previously noted, other than the adaptations needed to introduce the particulate modifier, the lay-up and curing steps used in preparing the toughened composite structures will be conventional. These process steps may be carried out using any of the variety of conventional processing devices and equipment and employ such conventional process steps, adaptations and modifications as are ordinarily employed in the composite art.

The invention will be better understood by consideration of the following Examples, which are provided by way of illustration. In the Examples, all parts are by weight, and all temperatures are given in Centigrade unless otherwise noted.

## EXAMPLES

The following materials and formulations are employed in the Examples.

Epoxy Resin Formulations

| component | pbw |
|---|---|
| **EP-1:** | |
| bis (2,3-epoxycyclopentyl) ether, epoxy resin | 40.8 |
| 4,4'-bis(3-aminophenoxy) diphenyl sulfone, amine hardener | 48.1 |
| BF3:TEA boron trifluoride:triethanolamine complex; curing aid/accelerator | 0.9 |
| PEI Polyether imide obtained as Ultem 1000 from General Electric Company | 10.2 |
| total: | 100.0 |
| **EP-2:** | |
| N,N,N',N' tetraglycidyl 4,4'-methylene dianiline, MY 721 epoxy resin from Ciba Geigy | 25 |
| epoxidized novolac resin DEN 431 epoxy resin from Dow Chemical Company | 32 |
| trimethylene glycol bis(p-aminobenzoate), Polacure 740M amine hardener from Polaroid Corp. | 32 |
| Polyarylate; the polymeric isophthalate and terephthalate esters of bisphenol A; Ardel D-100 from Amoco Performance Products, Inc. | 11 |
| total: | 100 |
| **EP-3:** | |
| bis (2,3-epoxycyclopentyl) ether, epoxy resin | 42.8 |

9

| | |
|---|---|
| 4,4'-bis(3-aminophenoxy) diphenyl sulfone, amine hardener | 49.7 |
| BF3:TEA; see EP-1 | 0.9 |
| PEI; see EP-1 | 7.4 |
| total: | 100.8 |

EP-4:

| | |
|---|---|
| N,N,N'N'-tetraglycidyl-4,4'-methylene dianiline, MY 9612 epoxy resin from Ciba Geigy | 28.0 |
| O,N,N-triglycidyl p-aminophenol, MY 0510 epoxy resin from Ciba Geigy | 37.0 |
| 3,3'-diaminodiphenyl sulfone, HT 9719 amine hardener from Ciba Geigy | 18.6 |
| N,N-dimethyl-N'-phenyl urea, Omicure 94 cure accel. from Omicron Chemicals | 0.4 |
| PES Polyether sulfone, Victrex 200P from ICI Company | 16.0 |
| total: | 100.0 |

EP-5:

| | |
|---|---|
| bis (2,3-epoxycyclopentyl) ether, epoxy resin | 41.8 |
| 4,4'-bis(3-aminophenoxy) diphenyl sulfone, amine hardener | 49.4 |
| BF3:TEA see EP-1 | 0.9 |
| PEI see EP-1 | 7.9 |
| total: | 100.0 |

Particulate Modifiers

| abbrev. | composition |
|---|---|
| ABS-1 | Spray-dried particles of carboxylated styrene-butadiene-acrylonitrile terpolymer with approximately 0.038 equivalents of carboxyl functionality per 100 g of resin, Tg of 26°C and ave. particle size 13 microns, as received; prepared from Hycar 1578X1 latex, by B.F. Goodrich Company |
| ABS-2 | A mixture of equal weights of as-received ABS-1 particles and acid-treated ABS-1 particles obtained by slurrying with aqueous hydrochloric acid at a pH of 2 - 3, washing with water and with methanol, drying at 80°C in a vacuum oven, milling and then sieving (200 mesh = openings of 0.074 mm) |
| Epoxy-MDA | Epoxy resin particles prepared by curing a dispersion of bisphenol epoxy resin (Epiclon 830 from Dianippon Ink.), methylene dianiline (1.2/1 stoichiometry) and a surfactant in hexadecane at 150°; ave. particle size 70 microns, range 10 to 150 microns. |
| Torlon-1 | Finely-divided polyamide-imide particles, particle size 0.1 to 125 microns; obtained as Torlon 4000 TF powder from Amoco Performance Products Inc. Powder was heated at 250°C for 12 hr. to ensure full cure. |
| Flock-1 | Precision cut 3 denier Nylon fiber flock, 500 microns in length, from Flock Industries Inc. |
| Flock-2 | Precision cut oxidized polyacrylonitrile fiber flock, 500 microns in length and about 6 microns in diameter, prepared by Flock Industries, Inc. from fiber supplied by Amoco Performance Products, Inc. |
| Flock-3 | Precision cut carbon fiber flock, 500 microns in length and about 6 microns in diameter, prepared by Flock Industries, Inc. from fiber supplied by R.K. Textiles. |

Flake-1    Hexagonal flakes measuring about 0.22 mm cut
from 0,0254 mm Ultem 1000 PEI film.

---

The flock and flake particles, in the form received, generally included surface contaminants such as process oils, cutting oils and the like used during the cutting or chopping operation. The contaminants were removed before use in fabricating composites, generally by rinsing the particles with methylene chloride followed by alcohol, and then drying the particles. Alternatively, the particles may be dispersed in warm (60° C) aqueous sodium carbonate for an hour, then collected by filtration, rinsed with solvents and dried.

Fibers

Except where otherwise noted, the carbon fiber used in the Examples was Thornel® T650-42 grade carbon fiber from Amoco Performance Products, Inc. This fiber typically has a filament count of 12,000 filaments per tow, a yield of 0.44 g/m, a tensile strength of 51,1 $kg/cm^2$, a tensile modulus of 2.94 $kg/cm^2$ and a density of 1.78 $g/cm^3$. In the Examples, ribbon formed from the fiber was used to prepare prepreg having fiber areal weights of 144 to 146 $g/m^2$.

Test Procedures

Compression After Impact Test.

This procedure, referred to as the Compression After Impact test or CAI, is generally regarded as standard test method in the industry. The test specimens are panels measuring 15.2 x 10.2 cm, cut from the fiber-reinforced composite sheets. The panels are first impacted by being subjected at the center to an impact of 680 cm-kg/cm in a Gardner Impact Tester, using a 1.6 cm diameter indenter. The impacted panel is then placed in a jig and tested edgewise for residual compressive strength. The details are further described in "NASA Contractor Report 159293", NASA, August, 1980.

Glass Transition Temperature (Tg).

Values for Tg were obtained by standard differential thermal analysis (TGA) techniques; the heating rate was 10°/min.

The methods of the following Examples are representative of those that may be employed for preparing the resin formulations, prepreg and composites useful in the practice of this invention. The processes will be generally recognized by those skilled in the art as processes and methods commonly employed for the production of thermoset resin formulations and composites.

Control Example A.

An EP-1 resin formulation was prepared by heating 40.8 parts by weight (pbw) of bis (2,3-epoxycyclopentyl) ether to 130° C while stirring, and then adding 10.2 pbw of Ultem 1000 polyether imide resin. Stirring and heating was continued at 130° C while the resin dissolved, about one hour, and then 48.1 pbw of 4,4 -bis (3-aminophenoxy) diphenyl sulfone were added, cooling the mixture to 90°. The mixture was stirred and heated at 105° for about 10 minutes then cooled to 80° C and 0.9 pbw of BF3-triethanolamine complex was added with vigorous stirring. After an additional 10 min. of stirring, the resin was discharged from the reaction vessel and cooled.

The thermosetting epoxy formulation was coated on 34.3 cm width silicone-coated release paper, obtained as W-89-SPT-6BE/PST3A from Mead Release Products Company. The coating was made at a coating weight of 41 g/m², to provide two rolls of coated paper. A 30 cm wide ribbon of carbon fiber was formed from 105 tows of carbon fiber. A prepreg machine was used to form the prepreg by sandwiching the ribbon between films from the two rolls and pressing to provide a tape having 67 wt.% carbon fiber, a fiber areal weight of 145 g/m², and a thickness of about 0.14 mm.

The prepeg tape was laid up into 38 x 38 cm laminates with a ply configuration of $[+45/90/-45/0]_{4s}$ and cured in an autoclave under 6:3 kg/cm² pressure at 179°C for 2 hr. The resulting composite panel, after cooling, was used to provide test specimens for Compression After Impact evaluations.

Control Example B.

An EP-2 epoxy reason formulation with polyarylate thermoplastic was prepared by heating 32 pbw of an epoxy novolac resin, with stirring, to 160°C and then adding 11 pbw of Ardel D-100 polyarylate. The mixture was held at 160°C with stirring for 60 min., cooled to 100°C and then 25 pbw of tetraglycidyl methylene dianiline and 32 pbw of trimethylene glycol bis(p-aminobenzoate) were added. Stirring was continued until the ester dissolved, about 20 min., and the mixture was then discharged and cooled.

A prepreg was prepared and formed into a composite, substantially by the processes employed for the composite of Control Example A. The composite panel was cut to form test specimens.

Control Example C.

Additional composites were prepared as Control Example C using substantially the same procedures as those used for Control Example A, substituting the EP-3 epoxy resin formulation. Minor changes in handling were employed to accommodate slight differences in the physical characteristics of the resin formulation, as will be readily understood by those skilled in the epoxy resin formulating art.

Control Example D.

An EP-4 epoxy resin formulation was prepared by heating a solution of 675 pbw of the triglycidyl p-amino phenol and 950 pbw of the tetraglycidyl methylene dianiline in 2000 pbw of methylene chloride to 45°C. The mixture was stirred and methylene chloride was distilled while adding 400 pbw polyether sulfone. The stirred mixture was further heated to remove methylene chloride, finally at a reduced pressure of 71 cm, to a final temperature of 110°C and held at that temperature for 1 hr. The diaminodiphenyl sulfone, 465 pbw, was then added over a 5 min. period and the mixture was then stirred at 100°C for 1 hr., under a vacuum of 71 cm to remove residual solvent. After the temperature was reduced to 90°C, 10 pbw of the Omicure 94 was added, stirring was continued for 5 min. and the resin was discharged.

The resin was used to prepare prepreg and composite substantially by the procedures of Control Example A.

Control Example E.

An additional control composite was prepared using substantially the same procedures as those used for Control Example A, substituting the EP-5 epoxy resin formulations. Minor changes in handling were employed to accommodate slight differences in physical characteristics of the resin formulations, as will be readily understood by those skilled in the epoxy resin formulating art.

In the following Examples 1 and 2, composites were prepared using two-step processes. A low resin content prepreg tape was first prepared, then layered with a film of particle-filled resin to make the final prepreg tape with particles distributed in the resin on one surface.

Example 1.

An EP-1 epoxy resin formulation filled with ABS-2 particles was prepared by placing 45 pbw of a solution of bis (2,3-epoxycyclopentyl) ether and Ultem 1000 polyether imide (80/20 wt. ratio) into a sigma blade mixer. ABS-2 particles, 12 pbw, were added while stirring and heating the mixture to 120°C followed by 42.2 pbw 4,4'-bis (3-aminophenoxy) diphenyl sulfone. The resin was mixed at 120°C for 10 min., cooled to 70°C, 0.8 pbw BF3-triethanol amine complex was added and the mixture was then stirred for 10 min., discharged and cooled.

Films of the particle-filled resin formulation were prepared by coating the formulation on release paper at a coating weight of 32 g/m². Prepreg tape having a fiber content of 74 wt.%, prepared substantially as in Control Example A, was then coated on one side in a second operation by passing a layer of the prepreg with a layer of the film through the prepreg machine. The final prepreg had approximately 67 wt.% carbon fiber, with about 4.6 wt.% of the particulate modifier, based on overall weight of matrix resin plus modifier, dispersed in the resin as a coating on one surface.

Composite panels were prepared substantially following the procedure of Control Example A, and cut into specimens for testing.

Example 2.

The composite of Example 2 was prepared substantially by the procedures used in Example 1, substituting Epoxy-MDA cured epoxy resin particles for the ABS-2 particulate modifier. The composition and properties are summarized in Table I.

In the composite of Example 3, a one-step process was used to prepare the prepreg. The particulate modifier was mixed into the matrix resin and formed into films by a coating process. A dry fiber web was then sandwiched with two such filled resin films in a prepreg machine to provide prepreg having particles dispersed in the resin at both surfaces.

Example 3.

A sample of EP-3 resin, 93.8 pbw, was charged to a sigma blade mixer and sheared for 10 min., to a resin temperature of 35°, then 6.2 pbw of ABS-1 particles were added. After mixing about 20 min. to uniformly disperse the particles, the resin was discharged.

Films of the filled resin were formed by coating at a coating weight of about 43 g/m² and the procedures of Control Example A were substantially followed to provide a prepreg tape having a fiber areal weight of 145 g/m² and a resin content of 36.9 wt%. The majority of the flock particles were localized at the surfaces of the prepreg. Composite panels were formed substantially by the processes of Control Example A.

Comparative Examples

Example B-1.

An EP-2 resin formulation filled with an ABS-1 particulate modifier was prepared by combining a preblend of 28.1 pbw of epoxy novolac resin and 9.7 pbw of Ardel D-100 polyarylate at 90°C in a sigma blade mixer with 22 pbw of the tetraglycidyl methylene dianiline and stirring until homogeneous. ABS-2 particles, 12 pbw, were then added, the mixture was heated and stirred for 2 hr. at 100°C, and 28.1 pbw trimethylene glycol bis(p-aminobenzoate) were added. After stirring an additional 20 min., the mixture was discharged and cooled. The filled resin was formed into a film and combined with prepreg having a fiber content of 74 wt% prepared as in Control Example B to form a composite by generally following the procedures of Example 1.

Example D-1.

An EP-4 epoxy resin formulation filled with ABS-1 particles was prepared by placing 88 pbw of EP-4 resin into a sigma blade mixer, mixing to a temperature of 45°C then adding 12 pbw of ABS-1 particles and stirring until the particles were uniformly dispersed, about 10 min., and discharging the resin. The filled

14

resin was formed into a film by coating on release paper at a coating weight of 32 g/m$^2$, then combined with prepreg of Control Example D having a fiber content of 73 wt% following substantially the procedure of Example 1 to give a final prepreg containing 37.6 wt% resin with about 4.6 wt% of the particulate modifier, based on overall weight of matrix resin plus modifier, dispersed in the resin as a coating on one surface. Composite panels were prepared for testing as in Control Example A.

The compositions and physical properties of the composites of Examples 1-3 together with those of Control and Comparative Examples are summarized in the following Table I.

TABLE I

| Ex. No. | Epoxy | Filler (wt%) | Fiber (wt%) | thickness (mm) | CAI kg/cm$^2$ |
|---------|-------|--------------|-------------|----------------|---------------|
| A | EP-1 | none | 67.0 | 4.55 | 2,114 |
| 1 | EP-1 | ABS-2 4.6 | 64.3 | 4.57 | 3,465 |
| 2 | EP-1 | Epoxy/MDA 4.0 | 67.9 | 4.57 | 2,737 |
| C | EP-3 | none | 63.7 | 4.52 | 2,212 |
| 3 | EP-3 | ABS-1 6.2 | 63.0 | 4.72 | 3,339 |
| Comparative Examples | | | | | |
| B | EP-2 | none | 63.7 | 4.75 | 2,072 |
| B-1 | EP-2 | ABS-1 4.4 | 62.0 | 4.85 | 2,653 |
| D | EP-4 | none | 64.2 | 4.70 | 1,960 |
| D-1 | EP-4 | ABS-1 4.5 | 62.4 | 4.78 | 2,611 |
| Notes: EP-1, etc. are Epoxy formulations; these and the abbreviations for filler particles are summarized in text; Filler content is wt.% based on resin content plus filler; Fiber content is wt% based on total composite; CAI = Compression Af er Impact; see text for testing procedures. | | | | | |

It will be apparent from a consideration of the residual compressive strengths of the examples and a comparison with the corresponding control examples that spacing the plies of a layered composite by dispersing an appropriate particulate modifier in a cycloaliphatic epoxy matrix resin within the inter-ply spacing affords a substantial improvement in composite toughness. For example, carboxylated ABS particles produce an increase of from 630 to nearly 1400 kg/cm$^2$ when added to a variety of matrix resin formulations, and other resin particles produce improvements of similar magnitude. The comparative examples demonstrate that the improvements noted with other epoxy resin matrix composites will be substantially less.

In the composites of the following Examples 4 through 8, a one-step process was used to prepare the prepreg. In these Examples, the particulate modifier was mixed into the matrix resin and formed into films by a coating process. A dry fiber web was then sandwiched with two such filled resin films in a prepreg machine to provide prepreg having particles dispersed in the resin at both surfaces.

Example 4.

A filled EP-1 resin formulation was prepared by charging 49.4 pbw of epoxy/PEI solution (80/20 weight ratio) to a sigma blade mixer and mixing while heating to 100°C then adding 3.2 pbw of Flock-1 particulate modifier. Mixing was continued until the flock was uniformly dispersed, then 46.5 pbw of 4,4'-bis (3-aminophenoxy) diphenyl sulfone were added over a 10 min period, and heating and stirring were continued an additional 20 min. After cooling the mixture to 80°C, stirring was continued while 0.9 pbw BF$_3$:triethanol amine complex was added and then for an additional 10 min., after which the resin was discharged.

Films of the filled resin were formed by coating at a coating weight of about 43 g/m$^2$ and the procedures of Control Example A were substantially followed to provide a prepreg tape having a fiber areal weight of 145 g/m$^2$ and a resin content of 36.9 wt%. The majority of the flock particles were localized at the surfaces of the prepreg. Composite panels were formed substantially by the processes of Control Example A.

### Example 5.

Prepreg tape with a fiber content of 65 wt%, produced from carbon fiber and an EP-3 epoxy resin formulation substantially according to the procedures of the Control Example A, was laid up into 38 x 38 cm laminates with a ply configuration of [+45/90/-45/0]$_{4S}$. During the lay-up operation, one surface of each ply was sprinkled with particulate modifier in the form of flakes to provide a substantially uniform single layer of flakes at a density of about 12 g/m$^2$. The flakes were formed of Ultem film and were hexagonal in shape, measuring approximately 0,20 mm across and having a thickness of 0,25 mm.

The lay-up was then cured in an autoclave under 6.3 kg/cm$^2$ pressure at 170°C for 2 hr., providing a composite panel. Test specimens were cut from the resulting panel and tested as before. The composite composition and property data are summarized in Table I.

### Example 6.

An EP-3 matrix resin formulation comprising 91 pbw of the EP-3 resin, 5.9 pbw of Flock-1 particulate modifier and 3.1 pbw of BAS-1 resin particles was prepared substantially as in Example 4. Composites were prepared substantially following the procedures of Example 4.

### Example 7.

A frozen sample of EP-5 resin, 91 pbw, was charged to a sigma blade mixer and sheared until the resin reached a temperature of about 35°C and became homogeneous (for 10 min.), and then continued after adding 9 pbw of Flock-2 particles until the flock was uniformly dispersed and the resin temperature was about 40°C. A film of the filled resin was prepared at a coating weight of 30 g/m$^2$, and combined with prepreg tape having a fiber content of 73 wt% prepared from carbon fiber and EP-2 resin following the procedures of Example A, using a prepreg machine to give a prepreg tape having a fiber content of 68wt% and a fiber areal weight of 148 g/m$^2$, with Flock-2 particles dispersed in the resin coating on one surface. Composites were prepared substantially by the procedures of Example 4 to provide test panels having a fiber volume fraction Vf of 61.1. The composite composition and property data are summarized in Table I.

### Example 8.

Prepreg tape having a fiber content of 73 wt%, prepared from carbon fiber and EP-5 resin, was sandwiched with two filled resin films of Example 7 to provide a final prepreg tape having a fiber content of 61 wt%. and a fiber areal weight of 148 g/m$^2$. Composites were prepared substantially by the procedures of Example 4 to provide test panels having a fiber volume fraction Vf of 53.1. The composite composition and property data are summarized in Table II.

### Example 9.

A resin film filled with Flock-3 particles was prepared from 91 pbw of EP-2 resin and 9 pbw Flock-3 particles following substantially the process of Example 4. The film was combined with prepreg tape having a fiber content of 73 wt%, prepared from carbon fiber and EP-2 resin, to provide a final prepreg tape having a fiber content of 63 wt% and a fiber areal weight of 147 g/m$^2$. Composites were prepared substantially by the procedures of Example 4 to provide test panels having a fiber volume fraction Vf of 56.1. The composite composition and property data are summarized in Table II.

The compositions and physical properties of the composites of Examples 4 - 8 are summarized in the following Table II.

## TABLE II

| Ex. No. | Epoxy | Filler wt% | Fiber wt% | thickness (mm) | CAI (kg/cm²) |
|---------|-------|------------|-----------|----------------|--------------|
| A | EP-1 | none | 67.0 | 4.55 | 2,110 |
| 4 | EP-1 | Flock-1 3.2 | 63.1 | 4.65 | 3,050 |
| C | EP-3 | none | 63.7 | 4.52 | 2,210 |
| 5 | EP-3 | Flake-1 12.8 | 60.6 | 4.72 | 2,910 |
| 6 | EP-3 | Flock-1 5.9 and ABS-1 3.1 | 63.0 | 4.60 | 3,340 |
| E | EP-5 | none | 62.3 | 4.75 | 2,280 |
| 7 | EP-5 | Flock-2 9 | 68 | 4.32 | 2,900 |
| 8 | EP-5 | Flock-2 9 | 61 | 5.03 | 3,510 |
| 9 | EP-5 | Flock-3 9 | 63 | 4.70 | 3,170 |

Notes: see notes to Table I.

It will be seen from the data of Examples 4 - 9 that toughened composites of this invention may also be readily prepared by the one-step process. It will also be apparent from a comparison of the CAI values of the composites prepared using flock and flake particles as the particulate modifier that a substantial improvement in compressive strength again results with cycloaliphatic epoxy resins. Mixtures of particle types, such as ABS-1 particles and flock, are also effective in toughening such composites, seen by comparing Example 6 with C.

Example 10.

A sample of EP-3 resin formulation (84.4 pbw) was frozen, crushed and charged to a sigma blade mixer. The resin was sheared intermittently and then continuously, becoming homogeneous and reaching a temperature of 35°C after 15 min. Stirring was continued while 15.6 pbw of Torlon-1 particulate modifier were added. After the particles were uniformly dispersed and the mixture had reached a temperature of 40°C, the formulation was discharged. The filled resin was formed into a film by coating on release paper at a coating weight of 35 g/m², then combined with prepreg of Control Example C having a fiber content of 75 wt.% following substantially the procedure of Example 1 to give a final prepreg with a fiber areal weight of 146 g/m² containing 32 wt.% resin. Composite panels, prepared for testing as in Example 1, had a CAI of 2,740 kg/cm².

Additional Comparative Examples

Composites were prepared for comparison purposes by using soft, rubbery particles in place of the rigid resin particles of this invention.

Comparative Example F.

A prepreg was prepared using an epoxy resin formulation similar to EP-2, with 26.6 pbw N,N,N',N'-tetraglycidyl 4,4'-methylene dianiline, 30.0 pbw epoxidized novolac resin and 32.4 pbw trimethylene glycol bis(p-aminobenzoate). Prepreg was made using Thornel® T-40 grade carbon fiber, and layed up to form a composite substantially as described in Control Example A, but with a cure cycle of 2 hr. at 149°C. The composite had a CAI of 1,800 kg/cm².

A second prepreg was prepared substantially by the procedures of Example 4, using a film of rubber modified matrix resin having 10 wt% rubber particles with an ave. particle size of 20 microns. The rubber particles were spray-dried rubber with a Tg of -19°C, obtained as Hycar 1422 from B.F. Goodrich. The rubber modified prepreg was laid up into a composite and cured using the procedures as above. The composite had a CAI of 1,340 kg/cm², significantly lower than the composite without rubber.

It will thus be apparent that the use of particulate modifiers comprising soft, rubbery particles which are not capable of maintaining the desired ply spacing during fabrication is not effective in improving the toughness of composites.

The compositions of this invention form a substantially single, continuous phase upon curing. The prior art also describes the use of matrix resins having upon curing a phase-separated morphology comprising a plurality of rigid phases as a means for improving composite toughness. According to the prior art as represented by U.S. patent 4,656,208, resin formulations comprising an epoxy resin and an oligomer diamine having a molecular weight greater than 2000 will exhibit a phase-separated morphology on curing. Such compositions may be toughened by incorporating a low molecular weight liquid rubber into the discontinuous phase of such matrix resins, according to U.S. 4,680,076.

Comparative Example G.

A composite of the type disclosed in U.S.A. 4,656,208 to have a phase-separated morphology was prepared. The epoxy resin formulation:

| component | | pbw |
|---|---|---|
| Bisphenol F epoxy resin Epiclon 830 from Dianippon Ink | | 28.0 |
| O,N,N′ triglycidyl p-aminophenol, MY 0510 epoxy resin from Ciba Geigy | | 22.0 |
| 3,3′-diaminodiphenyl sulfone, HT 9719 amine hardener from Ciba Geigy | | 22.0 |
| Amine-terminated polysulfone of p-aminophenol, dichlorodiphenyl sulfone and bisphenol A with Mn = 4000; see U.S.A. 3,895,064 | | 25.0 |
| | total: | 97.0 |

The formulation was prepared by mixing the epoxy resins with the amine-terminated polysulfone at 100°C until completely dissolved, then adding amine hardener, stirring an additional 10 min. and discharging the resin. Prepreg was prepared and laid up to form composite panels by the procedures of Control Example A. The prepreg had a fiber content of 63.8 wt%, and a fiber areal weight of 144 g/m². The CAI value for the 4.52 mm thick panel specimens was 2,400 kg/cm².

Comparative Example H.

A composite of the type disclosed in U.S. 4,656,208 to be a phase-separated composite was prepared with a particulate rubber modifier. Prepreg having a resin content of 29 wt% was first prepared using the formulation and procedures of Comparative Example F.

A quantity of the matrix resin formulation with rubber modifier was then prepared, using Hycar 1072x28 cross-linked, carboxylated nitrile rubber having Tg values of -31°C and -18°C, obtained from B.F. Goodrich. The bulk rubber was dispersed in the resin by charging the rubber to a sigma blade mixer and shearing for 10 min., then adding a preblend of the epoxy resin and polysulfone and heating at 135° for 3 hr. The mixture was cooled to 100°C and the remaining ingredients were added. Stirring was continued an additional 20 min. before discharging the resin at 80°C. The average rubber particle size, by photomicrography, was 50 microns. The resin was made into a film at a coating weight of 12 g/m², and used to coat the prepreg on one side, giving a final prepreg with 36 wt% resin at a fiber areal weight of 146 g/m². The prepreg was then laid up and cured as in Control Example A to form a composite panel having a fiber content of 64.8 wt%. The CAI value for the composite panel specimens was 1,900 kg/cm².

Although the use of phase-separated morphologies to toughen composites has been reported in the art, production of these materials requires careful control in order to be successful. Proper gelation and particle formation during the cure cycle are highly dependent upon resin composition, curing conditions, aging and thermal history of the prepreg and other factors which will necessarily vary with the methods used in the fabrication of parts. The complexities of producing such materials thus mandate against their wide acceptance in commercial applications.

As will be seen by examination of the properties of the composites of the instant invention, substantial benefit can be realized without resort to such complex morphologies through spacing the plies by dispersing rigid resin particles between the plies in composites based on conventional, substantially single-phase matrix resins according to the teachings of this invention.

As is disclosed in the art, including in U.S. patent 4,783,506, a combination of infusible particles made from a rubber polymer with matrix resin formulations based on phase-separated morphologies may be used to toughen composites. However, producing such composites requires careful control in order to be successful. In one process the infusible particles are formed from a solution of a soluble rubber in the epoxy matrix resin during the curing step, while in an alternative process the infusible particles are formed from the soluble rubber in situ as a dispersion in the epoxy resin before fabricating the prepreg. Proper gelation and in situ particle formation during the cure cycle are highly dependent upon resin composition, curing conditions, aging and thermal history of the prepreg and other factors which will necessarily vary with the methods used in the fabrication of parts. In situ formation of the infusible particles in the epoxy resin prior to forming the prepreg also requires a high degree of control, in order to ensure that the rubber does not agglomerate rather than form the particles during the coagulation step, and to avoid inducing premature gelling of the matrix resin during the step of cross-linking the resulting particles. The complexities of producing such materials by in situ production of particles thus favors the use of alternative methods.

In the process of this invention, a particle preformed from a rigid resin is added to a cycloaliphatic epoxy matrix resin formulation prior to curing. The use of such particles provides a substantial improvement in toughness, while allowing the use of conventional process equipment and easily controlled process steps to produce improved toughened composites based on matrix resins having a substantially single phase morphology. The toughened composites of this invention and the methods of their manufacture thus clearly represent an improvement over the composites and processes disclosed in the art.

The invention will thus be seen to be a toughened, fiber-reinforced composite structure comprising discrete layers formed of continuous fiber embedded in a matrix resin, the layers being separated or spaced normally apart to form laminar regions comprising matrix resin filled with a particulate modifier, and a method for toughening fiber-reinforced composites. The improved fiber-reinforced composites are thus an improvement on conventional layered composites based on substantially single phase matrix resins, the improvement comprising the including of a particulate modifier in the laminar or inter-ply region between the fiber layers. The particulate modifier separates the plies and maintains the spacing between the plies during fabrication, and will be formed of resin particles having sufficient rigidity and hardness to withstand the pressures and temperatures encountered in composite fabrication. The particulate modifier will comprise resin particles lying in the range of from 1 to about 75 microns in size, defined as the particle's smallest dimension, and will be selected to have the majority of particles of a size to provide the desired inter-ply spacing, normally in the range of from 1 to about 75 microns. The method for toughening fiber-reinforced composites of this invention may be applied to composites formed using a wide variety of conventional matrix resins in combination with fiber reinforcement. However, the preferred compositions will be based on thermoset matrix resins and more preferably on epoxy resin formulations. Although the method may also have some utility with epoxy matrix resins characterized as having a phase-separated morphology, substantial improvement in toughness is realized without resort to such complex morphologies, and such compositions are therefore not preferred.

Further modifications and variations will become apparent to those skilled in the resin formulating and composite fabricating art, and such variations and modifications will lie within the scope of the invention as defined by the appended claims.

## Claims

1. A continuous fiber-reinforced composition, capable of being cured, comprising from 20 to 80 wt% of a continuous fiber and from 80 to 20 wt% of an epoxy resin formulation, characterized in that the epoxy resin formulation comprises :

(i) 100 pbw of a cycloaliphatic epoxy resin having a plurality of epoxy groups, from 6 to 150 pbw of an amine hardener, and from 0 to 30 pbw of a thermoplastic polymer dissolved in said epoxy resin, said epoxy resin formulation being capable of forming a substantially single, continuous, rigid phase upon curing; and

(ii) rigid particles dispersed therein.

2. The composition of claim 1, characterized in that said epoxy resin is a cycloaliphatic epoxy ether.

3. The continuous fiber-reinforced composition of claim 1 or 2, characterized in that the particles in the epoxy resin formulation are flakes, flock, beads, irregular particles or mixtures thereof.

4. The composition of claim 3, characterized in that said particles have a Tg greater than 15°C, and are selected from the group consisting of epoxy resins, polyamide resins, polyamide-imide resins, polyaryl ether resins, oxidized polyacrylonitrile, carbonized polyacrylonitrile, diene rubbers, carboxylated diene rubbers, and carboxylated acrylic rubbers, said particles comprising from 1 to 25 wt%, based on combined weight of particles and said resin formulation.

5. The continuous fiber-reinforced composition of claim 4, characterized in that said particles are oxidized polyacrylonitrile particles.

6. The continuous fiber-reinforced composition of claim 4, characterized in that said particles are carbonized polyacrylonitrile particles.

7. The continuous fiber-reinforced composition of claim 4, characterized in that said particles are polyamide-imide particles.

8. The continuous fiber-reinforced composition of claim 4, characterized in that said particles are polyaryl ether particles.

9. The continuous fiber-reinforced composition of claim 4, characterized in that said particles are formed of a cross-linked carboxylated rubber selected from the group consisting of carboxylated diene rubbers, carboxylated styrene-butadiene-acrylonitrile terpolymers, and carboxylated acrylic rubbers, said particles having from 0.1 to 5 wt% carboxyl functionality, a Tg above 15°C and a smallest dimension in the range of from 1 to 75 microns.

10. The composition of claim 9, characterized in that said particles are formed by spray drying.

·11. The continuous fiber-reinforced composition of claim 3 or 4, characterized in that said continuous fiber is continuous carbon fiber.

12. A cured composite obtained by curing a composition of claim 1, 2, 3, 4 or 11.

13. Composite consisting of continuous fiber in a cycloaliphatic epoxy resin matrix and forming a plurality of space- or part, discrete layers of plies, characterized in that there is a resonist particulate modifier and that it is in the matrix resin within the inter-ply spacing of the layered composite.

14. A cured composite according to claim 13.

15. Articles wholly or partially consisting of a composition or cured composition according to one of the claims 1 to 14.